# EUROPEAN PATENT APPLICATION

(11) **EP 4 851 725 A1**
(43) Date of publication of application: **09.12.2026**
(21) Application number: 25181459.6
(22) Date of filing: 06.06.2025
(51) Int. Cl.: G03H 1/00, G03H 1/02, C08K 5/00, B42D 25/328

(54) **EMBEDDED HOLOGRAM FOR LAMINATES**

(71) Applicant: Neenah Red Bridge International Limited, Bolton BL2 5PD (GB)
(72) Inventor: BURHOUSE, Richard, ALPHARETTA, 30009 (US); MOTAWE, Mohammad, ALPHARETTA, 30009 (US)
(74) Representative: Plasseraud IP

(57) **Abstract**

An embedded hologram for laminates is disclosed. The subject matter relates to a laminate comprising a base sheet, a colored coating on the base sheet, and a holographic laminate embedded between the colored coating and at least one lacquer coating. The holographic laminate includes an adhesive layer, a laminate layer, a metallic layer, and a holographic layer with microstructures, wherein the adhesive layer adheres to the colored coating. The lacquer coating comprising a polymeric resin and crosslinker, with a coating weight of at least 10 g/m² and up to 40 g/m², overlays the holographic laminate and colored coating. The lacquer coating may include a polymeric resin, a crosslinker, and a wetting agent in specified proportions. This configuration enhances security by embedding the holographic laminate and optionally providing an embossed profile on the lacquer coating's outer surface. The laminate is suitable for applications requiring tamper resistance and authentication features.

## Description

### Technical Field

The present disclosure relates to security and authentication technologies, specifically to laminates incorporating embedded holographic laminates for improved durability and tamper resistance.

### Background

Holographic elements are often used to quickly verify the authenticity of laminates such as those incorporated into identification documentation or high-value consumer goods, in particular government-issued identification documentation such as passports. Such laminates are generally exposed to differing and sometimes harsh conditions and subject to repeated stressors such as bending, folding, and manual handling. Such environmental exposure and stressors may lead to premature degradation of holographic elements which would make difficult or even render impossible authenticity verification.

Laminates of this nature often include both holographic elements and identifying foils containing, for example, the issuing governmental body's name and seal or consumer brand name. Foils and holographic elements differ in a number of structural ways. Foils generally comprise a metallic layer, such as aluminum, or a pigment-based plastic and are planar with uniform reflective surfaces. Although some foils may be textured, by brushing or patterning, foils do not comprise any interference patterns such as microscopic elements.

In contrast, holographic elements comprise microscopic interference patterns on a surface thereof to produce rainbow or 3-D optical effects which change color and pattern with the angle of light and viewing position. Holographic elements, due to their highly dynamic and complex optical behavior, are more difficult to counterfeit. Their structure also makes holographic elements more sensitive to degradation and also more challenging to protect against degradation.

### Summary

Previous attempts have been made to improve durability of foils located on laminates, however such attempts fail to provide sufficient protection to holographic elements.

Therefore, there exists a need to develop a durable, long-lasting holographic laminate which will resist degradation in response to repeated use, exposure to moisture or chemicals, bending, folding, or other manipulation while also mitigating the risk delamination between the multiple layers of such laminates.

Despite various attempts at making embedded optical elements more resistant, maintaining vibrant holographic imagery alongside long-term durability remains challenging. The present invention addresses the aforementioned challenges by providing a durable, long-lasting laminate which preserves optical integrity and resists delamination over the life-time of the laminate comprising a base sheet, a colored coating on said base sheet, a holographic laminate and at least one lacquer coating comprising a polymeric resin and crosslinker having a coating weight of equal to or greater than 10 g/m² and equal to or less than 40 g/m². When referring to maintaining optical integrity of the holographic element, the present invention refers to maintaining the structural integrity of the holographic element (i.e. the microscopic interference patterns thereof) so that the resulting laminate maintains the holographic element effects producing rainbow or 3-D optical effects which change color and pattern with the angle of light and viewing position.

### Brief Description of Figures

**Fig. 1** **is** a schematic of an example laminate according to the present invention.
**Fig. 2** is a schematic of another example laminate according to the present invention.
**Fig. 3** is a schematic of another example laminate according to the present invention.

### Description of Embodiments

This description and the accompanying drawings describe different embodiments encompassed by the claims for illustration purposes and should not be taken as limiting, with the claims defining the scope of the present invention. Various mechanical, compositional, structural, and operational changes may be made without departing from the scope of this description and the claims. In some instances, structures and techniques well-known in the field of the invention have not been shown or described in detail so as not to obscure the description. Like numbers in two or more figures represent the same or similar elements. Furthermore, elements and their associated aspects that are described in detail with reference to one embodiment may, whenever practical, be included in other embodiments in which they are not specifically shown or described. For example, if an element is described in detail with reference to one embodiment and is not described with reference to a second embodiment, the element may nevertheless be claimed as included in the second embodiment. Moreover, the depictions herein are for illustrative purposes only and do not necessarily reflect the actual shape, size, or dimensions of the system or illustrated components.

It is noted that, as used in this specification and the appended claims, the singular forms "a," "an," and "the," and any singular use of any word, include plural referents unless expressly and unequivocally limited to one referent. As used herein, the term "include" and its grammatical variants are intended to be non-limiting, such that recitation of items in a list is not to the exclusion of other like items that can be substituted or added to the listed items.

When a layer is being described as "on" or "over" another layer, it is to be understood that the layers can either be directly contacting each other or have another intervening layer therebetween, unless expressly stated to the contrary. The terms are thus simply describing the relative position of the layers to each other and do not necessarily mean "on top of" since the relative position above or below depends on the orientation of the viewer.

As used herein, "first", "second", and "third" may be used interchangeably to distinguish one component from another and are not intended to signify location or important of the individual components.

Except as otherwise noted, the dimensions and values disclosed herein are not to be understood as being strictly limited to the exact numerical values recited. Instead, unless otherwise specified, such value is intended to mean both the recited value and a functionally equivalent range surrounding that value. For instance, whether the word "about" or "approximately" are present or not, the values as presented may be rounded up to the next lower or higher decimal value. For example, 40.15 mm is intended to mean strictly 40.15 mm or "about 40.15 mm", meaning that the value may vary from 40.10 mm to 40.20 mm. Similarly, 0.122 is intended to mean strictly 0.122 mm or "about 0.122 mm", which may comprise from 0.120 mm to 0.130 mm. The materials, methods, and examples described herein are illustrative.

The present invention discloses a laminate 100 comprising a base sheet 101, a colored coating 102 on said base sheet 101, a holographic laminate 103 on at least a portion of the colored coating 102 comprising an adhesive layer 103a, a laminate layer 103d, a metallic layer 103b, and a holographic layer 103c comprising a plurality of microstructures disposed on a surface thereof, wherein the holographic layer 103c is between the adhesive layer 103a and laminate layer 103d, and wherein the adhesive layer 103a is on the colored coating. At least one lacquer coating 104 is on the holographic laminate 103 and the colored coating 102, wherein the holographic laminate 103 is embedded between the colored coating 102 and lacquer coating 104, and wherein the at least one lacquer coating 104 comprises a polymeric resin and crosslinker has a coating weight of equal to or greater than 10 g/m² and equal to or less than 40 g/m². Coating weight is determined according to BS 3432, TSOP attached by cutting 10 cm X 10 cm and weighing the sample then scaling the weight up to g/m².

The laminate of the present invention may be incorporated into objects such as security documents, high-value consumer goods or packaging, or any other official documents that incorporates security elements such as holograms, watermarks, microprinting, or specialized coatings to enhance durability and resist fraudulent alterations or counterfeited replication. A security document should be understood to refer to a physical document designed with features to prevent counterfeiting, tampering, or unauthorized duplication, ensuring its authenticity and integrity. Examples include passports and other travel documents or certificates. High-value consumer goods are products that are typically expensive, premium, or luxury items, often associated with high quality, brand recognition, or exclusivity. These goods may include items such as designer clothing, jewelry, electronics, luxury vehicles, and are often targeted for markets where durability, authenticity, and brand protection are of importance.

The described configuration of the laminate 100 achieves several technical effects. By embedding the holographic laminate 103 between the colored coating 102 and the lacquer coating 104, the invention provides enhanced durability and protection for the holographic laminate 103 so that optical integrity of the holographic layer is maintained. The laminate 100 is configured to maintain the enhanced durability and protection for the lifetime of the laminate, for example more than 10 years, preferably up to 15 years for passports.

The inclusion of a polymeric resin and a crosslinker in the at least one lacquer coating provides several technical effects. The polymeric resin forms a durable and flexible matrix that enhances the mechanical strength and adhesion properties of the lacquer coating, ensuring long-term protection of the underlying holographic laminate. The crosslinker improves the chemical bonding within the lacquer coating 104, increasing its resistance to environmental factors such as moisture, heat, and abrasion. This crosslinking also enhances the cohesive strength of the lacquer coating 104, reducing the likelihood of cracking or delamination under stress.

Polymeric resin generally includes but is not limited to homopolymers; copolymers such as block, graft, random and alternating polymers; and terpolymers; blends, and modifications thereof. Furthermore, unless otherwise specifically limited, the term "polymer" shall include all possible geometrical configurations of the material including but not limited to isotactic, syndiotactic, and random symmetries.

The lacquer coating **104** controlled coating weight of equal to or greater than 10 g/m² and equal to or less than 40 g/m² prevents degradation or peeling of the holographic laminate **103** while maintaining flexibility of the laminate **100** to withstand repeated handling. The controlled coating weight also ensures the holographic laminate **103** retains its optical integrity. In particular, coating weights below the controlled range fail to protect against peeling or delamination of the holographic laminate **103** from the colored coating **102** while coating weights above the controlled range may cause cracking of the laminate **100** under repeated manipulation due to decreased flexibility and may obscure the holographic laminate **103** due to the increased thickness of the lacquer coating **104** thereon.

Additionally, the layered structure, which includes an adhesive layer **103a,** laminate layer **103d,** metallic layer **103b,** and holographic layer **103c,** ensures robust adhesion between the components, reducing the risk of delamination or peeling of the components between the colored coating **102** and the lacquer layer **104.** The precise positioning of the holographic layer **103c** between the adhesive layer **103a** and laminate layer **103d** further enhances the structural integrity of the laminate **100.** This configuration not only improves the tamper resistance of the laminate **100** but also maintains the structural integrity of the holographic layer (i.e. the microscopic interference patterns thereof) so that the resulting laminate maintains the optical effects necessary for authentication, thereby deterring counterfeiting and ensuring reliable verification.

The base sheet **101** may include a nonwoven web such as a saturated or non-saturated, cellulose or cellulose-based paper, a woven web such a cloth or other fabric, a polymeric film, or combinations thereof. In some preferred examples, the base sheet **101** comprises cellulose or a cellulose-based paper. The base sheet **101** may be a single layer or multiple layers. The base sheet **101** is generally flexible and should have sufficient strength for handling, coating, sheeting, and/or other operations associated with the manufacture and use of the laminate **100.**

The base sheet **101** may have a basis weight of equal to or greater than 150 g/m² and equal to or less than 450 g/m². The specified basis weight range ensures sufficient mechanical strength to withstand handling, bending, and folding during the lifecycle of the laminate **100.** This durability is of consequence for applications such as passports, which are subject to frequent use and environmental exposure.

Additionally, the selected basis weight range provides a balance between flexibility and rigidity. A lighter base sheet **101** may lack the necessary structural integrity, while a heavier base sheet could reduce the laminate's **100** flexibility, making it less practical for certain applications. By maintaining this controlled range, the base sheet **101** supports the layered structure, including the colored coating **102,** holographic laminate **103,** and lacquer coating **104,** without compromising the laminate's **100** overall performance.

Furthermore, the specified basis weight enhances the compatibility of the base sheet **100** with various manufacturing processes, such as coating, embossing, and lamination, ensuring consistent quality and reliability in the production of the laminate **100.** This contributes to the laminate's **100** long-term durability, tamper resistance, and ability to maintain its security features under repeated handling.

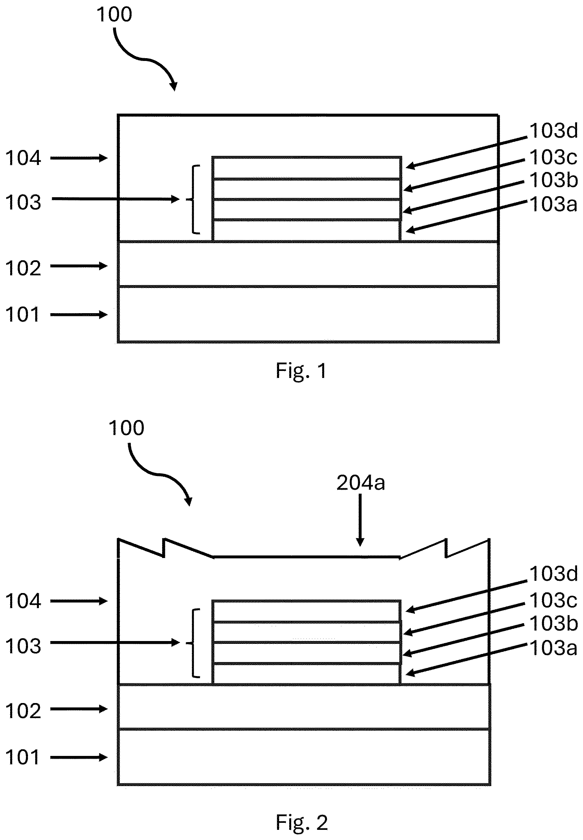

The colored coating **102** may be located directly on the base sheet **101,** as shown in Fig. 1, however, in some examples, there may be additional intervening layers, not shown, disposed between the colored coating **102** and the case sheet **101,** such as adhesive layer(s), conformable layers, etc. The colored coating **102** may include a colored agent, such as a pigment or dye, dispersed within a polymer matrix. The pigment or dye is not limited and may include any pigments to achieve a desired laminate color. The polymer matrix may include acrylic, polyvinyl acetate, polystyrenes, polyvinyl alcohols, polyurethanes, polyvinylchlorides, as well as many copolymer lattices such as ethylene vinyl acetate copolymers, acrylic copolymers, vinyl chloride-acrylics, vinyl acetate acrylics, and combinations thereof.

The thickness of the color coating **102** may vary considerably depending upon a number of factors including, but not limited to, the type of base sheet **101** or the end use of the laminate **100.** The color coating **102** may have an average thickness of equal to or less than about 50 microns, for example from 8 microns to 30 microns, or from 5 microns to 20 microns. Thickness was measured according to BS EN ISO 534-2005. The color coating **102** may have a basis weight of equal to or less than about 45g/m², for example from 2 g/m² to 25 g/m².

The color coating **102** may be formed on the base sheet **101** by known coating techniques, such as by roll, blade, Meyer rod, and air-knife coating procedures. The color coating **102** then may be dried by, for example, steam-heated drums, air impingement, radiant heating, or some combination thereof.

In some examples, the at least one lacquer coating **104** further comprises a wetting agent.

The wetting agent ensures uniform application of the lacquer coating **104** by improving its ability to spread and adhere to the underlying layers, including the holographic laminate **103** and colored coating **102.** This results in a consistent and defect-free lacquer coating **104,** which is of consequence for maintaining the optical clarity and security features of the holographic laminate **103.** Together, these components contribute to the overall durability, tamper resistance, and longevity of the laminate **100.**

The at least one lacquer coating **104** may be equal to or greater than 13 micron and equal to or less than 20 microns thick. The specified thickness range of 13 microns to 20 microns for the lacquer coating **104** ensures that the lacquer coating forms a robust protective layer over the underlying holographic laminate **103** and colored coating **102,** shielding them from environmental factors such as moisture, abrasion, and chemical exposure. At the same time, the thickness is controlled to maintain the flexibility of the laminate **100,** allowing it to withstand repeated handling, bending, and folding without cracking or delaminating.

The polymeric resin may be included in the at least one lacquer coating **104** in an amount of equal to or greater than 85% by weight and equal to or less than 98% by weight, preferably equal to or greater than 90% by weight and equal to or less than 95% by weight.

The specified concentration of the polymeric resin in the lacquer coating **104** provides several technical effects. By including the polymeric resin in an amount of 85% to 98% by weight, preferably 90% to 95% by weight, the lacquer coating **104** achieves a balance between mechanical strength, flexibility, and adhesion properties. This high concentration ensures the formation of a robust and durable matrix that effectively protects the underlying holographic laminate **103** from environmental factors such as moisture, abrasion, and chemical exposure.

The controlled range of polymeric resin concentration also enhances the cohesive strength of the lacquer coating **104,** reducing the risk of cracking or delamination under repeated handling or stress. Furthermore, the flexibility imparted by the resin allows the laminate **100** to withstand bending, folding, and other mechanical manipulations without compromising the integrity of the holographic laminate **103.** This precise formulation ensures long-term durability and maintains the optical clarity of the holographic laminate **103,** thereby preserving the laminate **100** authentication and tamper-resistance capabilities.

In some examples, the polymeric resin may be selected from the group consisting of water-based acrylic, water-based acrylate, polyurethane, polysilicone, nitrocellulosic material, polytetrafluoroethylene, polyvinvyl acetate, copolymers thereof, or combinations thereof. In a particular example, the polymeric resin may be a water-based acrylic.

The selection of the polymeric resin from the above group offers a range of properties, such as high mechanical strength, flexibility, and chemical resistance, which contribute to the durability and performance of the lacquer coating.

In particular, the use of water-based acrylic as the polymeric resin provides excellent adhesion to the underlying layers, including the holographic laminate **103** and colored coating **102,** while maintaining sufficient optical clarity to clearly view the holographic laminate **103** during authentication. Water-based acrylic resins are also environmentally friendly and exhibit strong resistance to moisture, abrasion, and chemical exposure. This ensures that the lacquer coating **104** effectively protects the holographic laminate **103** from environmental degradation and mechanical stress, preserving the optical and security features of the laminate **100** over its lifetime.

Additionally, the versatility of the selected polymeric resins allows for improvements of the lacquer coating **104** properties to meet specific application requirements, such as enhanced flexibility for repeated handling or increased hardness for scratch resistance. This adaptability further contributes to the overall durability, tamper resistance, and longevity of the laminate **100.**

In some examples, the crosslinker may be selected from the group consisting of multifunctional acids, anhydrides, metal-based catalysts, polyaziridine, and carbonyls. In a preferred example, the crosslinker is polyaziridine. The selection of a crosslinker from the specified group enhances the chemical bonding within the lacquer coating **104,** creating a highly interconnected polymer network. This increased crosslink density improves the mechanical strength, cohesion, and adhesion properties of the lacquer coating **104,** ensuring that it remains intact under environmental stresses such as moisture, heat, and abrasion.

In particular, the use of polyaziridine offers superior crosslinking efficiency, resulting in a more durable and resilient coating. Polyaziridine's ability to form strong covalent bonds with the polymeric resin **103** enhances the lacquer coating **104** resistance to cracking, peeling, or delamination, even under repeated handling or mechanical stress. This ensures the long-term protection of the underlying holographic laminate **103,** maintaining its optical clarity and security features. Additionally, the robust crosslinked structure contributes to the overall tamper resistance and durability of the laminate **100.**

In some examples, the wetting agent may be included in the at least one lacquer coating **104** in an amount of equal to or greater than 0.5% by weight and equal to or less than 5.0% by weight, preferably equal to or greater than 0.75% by weight and equal to or less than 1.5% by weight. The controlled weight of the wetting agent improves the ability of the lacquer coating **104** to spread uniformly across the underlying layers, including the holographic laminate **103** and colored coating **102.** This ensures consistent application and eliminates defects such as uneven thickness, bubbles, or gaps in the coating.

A uniform and defect-free at least one lacquer coating **104** maintains the optical clarity of the holographic laminate **103,** as well as for preserving its security features. Additionally, the improved wetting properties enhance the adhesion of the lacquer coating **104** to the underlying layers, reducing the risk of delamination or peeling under mechanical stress or environmental exposure. This precise formulation contributes to the overall durability, tamper resistance, and long-term performance of the laminate **100.**

The at least one lacquer coating **104** is applied across the entire surface of the laminate **100** in a liquid state. Water may be used as the solvent in each of the at least one lacquer coatings **104.** Each of the at least one lacquer coatings **104** is applied individually then dried to remove the solvent. The process is repeated until all of the at least one lacquer coatings **104** are formed.

In some examples, the surface of the laminate **100** onto which the at least one lacquer coating **104** is applied is surface treated prior to application. The surface treatment may include a corona treatment to further improve adhesion between the colored coating **102** or holographic laminate **103** and the at least one lacquer coating **104.** The resulting surface energy of the colored coating **102** and/or holographic laminate **103** is configured to be equal to or greater than 40 dynes, for example from 40 dynes to about 55 dynes. This surface energy range improves adhesives strength for application of additional layers thereon, e.g. the at least one lacquer coating **104.** By ensuring the adhesive strength of the layers within the laminate **100** is greater than an external force applied thereto, degradation of the laminate **100** can be avoided over the lifetime of the laminate **100.**

The holographic laminate **103** may be only on a portion of the colored coating **102.** In other examples, not shown, the holographic laminate **103** may cover the entire colored coating **102.** When the holographic laminate **103** is applied to only a portion of the colored coating **102,** it allows for selective placement of additional aesthetic or security features, enabling customization of the laminate's design and functionality. This selective placement can be used to highlight specific areas for authentication, such as logos, seals, or other identifiers, while reducing material usage and production costs. Furthermore, by applying the holographic laminate **103** on only a portion of the colored coating **102,** direct adhesion between the lacquer coating **104** and the colored coating **102** may improve the overall adhesion of the laminate **100** minimizing the risk of delamination during repeated handling.

Alternatively, when the holographic laminate **103** covers the entire colored coating **102,** it provides comprehensive protection and uniform security features across the entire surface of the laminate. This configuration enhances the overall durability of the laminate **100** by protecting the entire colored coating **102** from environmental factors such as moisture, abrasion, and chemical exposure. Additionally, full coverage ensures that the laminate **100** maintains a consistent optical appearance, which can be of consequence for applications requiring high visual integrity and tamper resistance.

Both configurations contribute to the versatility of the laminate **100,** allowing it to meet a wide range of application requirements while maintaining robust security and durability.

As shown in Fig. 2, the at least one lacquer coating **104 may** comprise an outer surface **204a** such that at least a portion of the outer surface **204a** comprises an embossed profile. The embossed profile introduces a tactile and visual feature that enhances the security of the laminate **100** by making it more difficult to replicate or counterfeit. The unique texture and pattern of the embossed profile serve as an additional authentication element, allowing for quick and reliable verification of the laminate's **100** authenticity.

An "embossed profile" should be understood to refer to a raised or textured pattern created on the surface of the lacquer layer **104** through an embossing process, which involves applying heat and pressure using a patterned die or roller. In the context of the laminate **100,** the embossed profile can serve both aesthetic and functional purposes, such as enhancing visual appeal, providing a tactile feature for authentication, and increasing tamper resistance by making replication or alteration more difficult.

Furthermore, the embossed profile can be strategically designed to align with or complement the underlying holographic laminate **103,** thereby preserving the optical clarity and security features of the holographic laminate **103.** This configuration ensures that the embossed profile does not interfere with the visibility of the holographic laminate **103** while adding an extra layer of tamper resistance.

Additionally, the embossed profile can improve the laminate **100** aesthetic appeal, providing a premium look and feel. This feature contributes to the overall durability, functionality, and security of the laminate **100.**

A region of the outer surface **204a** of the at least one lacquer coating **104** below which the holographic laminate **103** is disposed may not comprise the embossed profile. In other examples, not shown, the entire outer surface **204a** may comprise the embossed profile. When the region of the outer surface **204a** directly above the holographic laminate **103** does not include the embossed profile, it ensures that the optical clarity and visibility of the holographic laminate **103** are preserved. This configuration prevents any distortion or interference with the holographic laminate **103** optical effects, maintaining its effectiveness as a security and authentication feature.

Alternatively, when the entire outer surface **204a** comprises the embossed profile, it enhances the laminate's **100** tamper resistance by making it more challenging to replicate or alter. The continuous embossed profile provides a uniform tactile and visual feature that adds an additional layer of security, making counterfeiting more difficult.

This flexibility in the design of the embossed profile allows for customization of the laminate **100** to meet specific security and aesthetic requirements. It ensures that the laminate can balance the need for robust security features with the preservation of optical elements, contributing to the overall durability, functionality, and authenticity of the laminate.

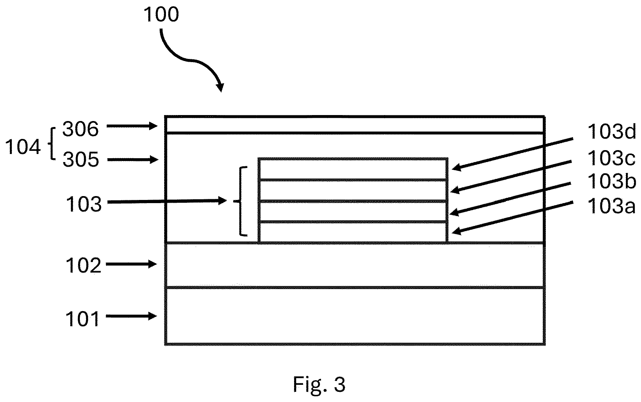

In one example, as shown in Fig. 3, the at least one lacquer coating **104** comprises two or more lacquer coatings. As shown in Fig. 3, there may be first lacquer coating **305** and a second lacquer coating **306** on the first lacquer coating **305,** however, in other examples, there may be additional lacquer coatings. In examples comprising two or more lacquer coatings **305, 306,** the outer-most lacquer coating may comprise the embossed profiled on an outer surface thereof, as previously described.

The use of two or more lacquer coatings **305, 306** provides several technical effects. By incorporating multiple lacquer coatings, the layered structure enhances the overall durability and protective properties of the laminate **100.** The first lacquer coating **305** can serve as a base layer to improve adhesion to the underlying holographic laminate **103** and colored coating **102,** while the second or additional lacquer coatings **306** can provide added protection against environmental factors such as moisture, abrasion, and chemical exposure.

When two or more lacquer coatings **305, 306** are present, the sum of the thickness of the two or more lacquer coatings **305, 306** is equal to or greater than 13 microns and equal to or less than 20 microns. The requirement that the total thickness remains within the specified range as laid out above, ensures that the combined lacquer layers provide consistent protection without becoming excessively thick. Excessive thickness could lead to reduced flexibility, increased risk of cracking, or optical distortion of the holographic laminate **103.** Conversely, a thickness below the specified range fails to provide adequate protection, leading to peeling or delamination.

By maintaining the total thickness within this range, the lacquer coating achieves a balance between durability, flexibility, and optical clarity, ensuring the long-term performance and security of the laminate. This precise formulation contributes to the laminate's tamper resistance and its ability to preserve the optical and authentication features of the holographic laminate.

When two or more lacquer coatings **305, 306** are present, the sum of the coating weight of the two or more lacquer coatings **305, 306** is equal to or greater than 10 g/m² and equal to or less than 40 g/m². This controlled range ensures that the two or more lacquer coatings **305, 306** collectively form a protective layer that is sufficiently robust to shield the underlying holographic laminate **103** and colored coating **102** from environmental factors such as moisture, abrasion, and chemical exposure. At the same time, the coating weight is controlled to maintain the flexibility of the laminate **100,** allowing it to endure repeated handling, bending, and folding without cracking or delaminating.

If the total coating weight exceeds the upper limit of 40 g/m², the increased thickness may reduce the laminate's **100** flexibility, leading to potential cracking or distortion of the holographic laminate **103.** Conversely, if the total coating weight is below 10 g/m², the protection may be insufficient to prevent peeling, delamination, or damage to the holographic laminate **103.**

In examples comprising two or more lacquer layers **305, 306,** the outer-most lacquer coating may include an embossed profile on its surface, as described above.

The flexibility to include additional lacquer coatings allows for enhancement of the laminate's **100** properties, such as increased scratch resistance, improved flexibility, or enhanced aesthetic appeal. This layered approach contributes to the long-term durability, tamper resistance, and functionality of the laminate **100.**

In some examples, the two or more lacquer coatings **305, 306** are the same composition. "Composition" should be understood to refer to both the components and the amount (weight %) of each of said components making up the two or more lacquer coatings **305, 306** such that "the same composition" should be understood to refer to each of the two or more lacquer coatings **305, 306** comprised of compositions in which all components and amount (weight %) of each component contained therein are the same. By maintaining uniformity in the composition of the lacquer coatings **305, 306,** the manufacturing process is simplified, ensuring consistency in the application and performance of the lacquer coatings **305, 306.** This uniformity reduces the likelihood of defects or variations that could arise from differences in material properties, thereby enhancing the overall reliability and quality of the laminate **100.**

Additionally, using the same composition for multiple lacquer coatings **305, 306** ensures that the mechanical, chemical, and optical properties of the coatings are consistent throughout the laminate **100.** This contributes to improved adhesion between the layers of the laminate **100,** enhanced resistance to environmental factors such as moisture and abrasion, and uniform protection of the underlying holographic laminate **103** and colored coating **102.**

The consistent composition also ensures that the optical clarity and security features of the holographic laminate **103** are preserved, as there are no variations in the refractive or adhesive properties of the lacquer coatings **305, 306.** This approach enhances the laminate's **100** durability, tamper resistance, and long-term performance.

In other examples, the two or more lacquer coatings **305, 306** may be different compositions. "Different compositions" should be understood to refer to two or more compositions in which at least one component or amount of said component (weight %) is distinct between the two or more compositions.

The use of two or more lacquer coatings **305, 306** with different compositions provides several technical effects. By varying the composition of the lacquer coatings **305, 306,** the properties of each layer can be tailored to meet specific functional requirements. For example, a base lacquer coating can be formulated to maximize adhesion to the underlying holographic laminate **103** and colored coating **102,** while an outer lacquer coating can be formulated to ensure enhanced resistance to environmental factors such as moisture, abrasion, and chemical exposure. Improving such properties as durability, chemical resistance, and/orthermal stability may be achieved by increasing the concentration of crosslinker in the composition. In some preferred examples, the polymer resin of the base lacquer coating may be selected from polyurethane, polysilicone, polyvinvyl acetate, or combinations thereof and the polymer resin of the outer lacquer coating may be selected from water-based acrylic, water-based acrylate, polytetrafluoroethylene, or combinations thereof.

This flexibility allows for the incorporation of specialized additives in different layers, such as crosslinkers for improved durability, wetting agents for uniform application, or embossing agents for creating tactile security features. The ability to customize each layer's composition ensures that the overall lacquer coating **102** achieves a balance of mechanical strength, flexibility, and optical clarity.

Additionally, the use of different compositions enables the laminate **100** to address specific application needs, such as increased scratch resistance, enhanced tamper resistance, or improved aesthetic appeal. This approach contributes to the long-term durability, functionality, and security of the laminate **100.**

Another aspect of the present invention provides an object comprising the laminate as described above wherein the object comprises or is a security document, a high-value consumer good, or packaging for high-value consumer goods. Example objects may include passports, visas, or other travel documentation; financial documents such as stock or bond certificates; high-value consumer goods such as textile consumer goods; or high-value consumer packaging including boxes, pouches, bags, sheets, sheaths, or combinations thereof.

By incorporating the laminate into various objects such as security documents, consumer products, or consumer packaging, the invention enhances the durability, tamper resistance, and authentication capabilities of these items.

In a specific example, when incorporated into security documents such as passports or visas, the laminate protects against environmental factors such as moisture, abrasion, and chemical exposure while preserving the optical clarity and security features of embedded holographic elements, thereby deterring counterfeiting and ensuring reliable verification for the lifetime of the passport or vias.

In consumer products and high-value goods, the laminate provides an additional layer of protection and brand security, safeguarding the product from tampering or unauthorized replication. Similarly, in high-value consumer packaging, such as boxes, pouches, or sheaths, the laminate enhances the structural integrity of the packaging while incorporating security features that prevent counterfeiting or tampering. This versatility allows the laminate to meet a wide range of application requirements, ensuring long-term performance, functionality, and security across various industries.

### Examples

Three examples of laminates according to the disclosure were manufactured. Example 1 was manufactured comprising a base sheet, a colored coating comprising a maroon-pigmented water-based polyacrylic resin (ST 4411 provided by Scitech) and modified silicone as a wetting agent, a commercial-grade holographic laminate (AL-GIO-NB-12 Single Image OVD foil provided by KURZ), and a lacquer coating. The lacquer coating comprised a water-based polyacrylic polymer resin (ST 4426 provided by Scitech), a polyazidine crosslinker (ST6058 provided by Scitech), polysiloxane as a wetting agent, and water as a solvent. The lacquer coating was coated on the holographic laminate and colored coating then dried.

Examples 2 and 3 were manufactured according to Example 1, with the exception that a corona treatment was applied to the laminate in Example 3 to increase the surface energy to 40 dynes prior to application of the lacquer coating.

The lacquer coating composition differed in the examples and comparative examples according to Table 1.

**Table 1**

| Formulation (wt%) | Polymer Resin | Crosslinker | Wetting Agent | Number of lacquer coatings |
|---|---|---|---|---|
| Example 1 | 91.25 | 2.75 | 1 | 1 |
| Example 2 | 91.25 | 2.75 | 1 | 2 |
| Example 3 | 91.25 | 2.75 | 1 | 1 |
| Comparative Example 1 | 94 | 0 | 1 | 1 |
| Comparative Example 2 | 91.25 | 2.75 | 1 | 1 |
| Comparative Example 3 | 94 | 0 | 1 | 1 |

**Table 2**

| | Coating weight (g/m²) | Tape Adhesion | Wet Crock Abrasion |
|---|---|---|---|
| Example 1 | 11 | Good | Good |
| Example 2 | 14 | Excellent | Excellent |
| Example 3 | 11 | Very good | Very good |
| Comparative Example 1 | 6 | Bad | Bad |
| Comparative Example 2 | 7 | Slightly good | Slightly good |
| Comparative Example 3 | 9 | Bad | Slightly good |

The tape adhesion test was conducted in accordance with BS EN ISO 2411:2000, TSOP attached. The wet-crock abrasion test was conducted in accordance with BS EN ISO 105-X12:1995 and AATCC Method 8-1989 or using a manual crock meter to apply 240 rounds using a wet cloth. The wet-crock abrasion test simulated repeated manual manipulation to approximate accelerated degradation of two or more years of the laminate. Results of each test were based on visual inspection and assessment to determine peeling, delamination, cracking, or other physical deterioration of the holographic laminate and/or laminate as a whole.

As indicated in Table 2, comparative examples 1 and 3 exhibited complete holographic delamination in response to the tape adhesion test. Comparative example 2 also exhibited some holographic delamination. Comparative example 1 exhibited substantial physical deterioration of the laminate in response to the wet crock abrasion test while comparative examples 2 and 3 exhibited some physical deterioration of the laminate.

In contrast, in examples 1-3, the holographic laminate remained at least substantially intact after the tape adhesion test. The laminates of examples 1-3 showed no significant signs of peeling or deterioration while the holographic laminate maintained its optical integrity in response to the wet crock abrasion test.

## Claims

1. A laminate comprising:
a base sheet;
a colored coating on said base sheet;
a holographic laminate on at least a portion of the colored coating,
wherein the holographic laminate comprises an adhesive layer, a laminate layer, a metallic layer, and a holographic layer comprising a plurality of microstructures disposed on a surface thereof, the holographic layer is between the adhesive layer and laminate layer, and wherein the adhesive layer is on the colored coating; and
at least one lacquer coating comprising a polymeric resin and a crosslinker on the holographic laminate and the colored coating, wherein the holographic laminate is embedded between the colored coating and lacquer coating, and wherein the at least one lacquer coating has a coating weight of equal to or greater than 10 g/m² and equal to or less than 40 g/m².

2. The laminate of claim 1, wherein the at least one lacquer coating further comprises a wetting agent.

3. The laminate of claim 2, wherein the polymeric resin is included in the at least one lacquer coating in an amount of equal to or greater than 85% by weight and equal to or less than 98% by weight, preferably equal to or greater than 90% by weight and equal to or less than 95% by weight.

4. The laminate of any one of claims 2 or 3, wherein the polymeric resin is selected from the group consisting of water-based acrylic, water-based acrylate, polyurethane, polysilicone, nitrocellulosic material, polytetrafluoroethylene, polyvinvyl acetate, copolymers thereof, or combinations thereof.

5. The laminate of any one of claims 2 to 4, wherein the crosslinker is included in the at least one lacquer coating in an amount of equal to or greater than 0.5% by weight and equal to or less than 5.0% by weight, preferably equal to or greater than 1.5% by weight and equal to or less than 3.0% by weight.

6. The laminate of any one of claims 2 to 5, wherein the crosslinker is selected from the group consisting of multifunctional acids, anhydrides, metal-based catalysts, polyaziridine, and carbonyls, preferably the crosslinker is polyaziridine.

7. The laminate of any one of claims 2 to 6, wherein the wetting agent is included in the at least one lacquer coating in an amount of equal to or greater than 0.5% by weight and equal to or less than 5.0% by weight, preferably equal to or greater than 0.75% by weight and equal to or less than 1.5% by weight.

8. The laminate of any one of claims 1 to 7, wherein the holographic laminate is on only a portion of the colored coating.

9. The laminate of any one of claims 1 to 8, wherein the at least one lacquer coating comprises an outer surface such that at least a portion of the outer surface comprises an embossed profile.

10. The laminate of claim 9, wherein a region of the outer surface of the at least one lacquer coating below which the holographic laminate is disposed does not comprise the embossed profile.

11. The laminate of any one of claims 1 to 10, wherein the base sheet has a basis weight of equal to or greater than 150 g/m² and equal to or less than 450 g/m².

12. The laminate of any one of claims 1 to 11, wherein the at least one lacquer coating comprises two or more lacquer coatings.

13. The laminate of claim 12, wherein the two or more lacquer coatings are the same composition.

14. The laminate of claim 13, wherein the two or more lacquer coatings are different compositions.

15. An object comprising the laminate of any one of claims 1 to 14, wherein the object comprises or is a security document, a high-value consumer good, or packaging for high-value consumer goods.
